# EUROPÄISCHE PATENTSCHRIFT

(11) **EP 3 356 693 B1**
(45) Veröffentlichungstag und Bekanntmachung des Hinweises auf die Patenterteilung: **22.07.2020**
(21) Anmeldenummer: 16785375.3
(22) Anmeldetag: 30.09.2016
(51) Int. Cl.: F16C 32/04, H02N 15/00

(54) **LAGER, INSBESONDERE FÜR EINE MAGNETSCHWEBEANORDNUNG**
BEARING, IN PARTICULAR FOR A MAGNETIC LEVITATION ASSEMBLY
PALIER, EN PARTICULIER POUR UN ENSEMBLE DE SUSTENTATION MAGNÉTIQUE

(30) Priorität: 02.10.2015 DE 102015116767
(43) Veröffentlichungstag der Anmeldung: 08.08.2018
(73) Patentinhaber: Waters GmbH, 65760 Eschborn (DE)
(72) Erfinder: WILL, Cornelia, 44801 Bochum (DE)
(74) Vertreter: Harding, Andrew Philip
(86) Internationale Anmeldenummer: PCT/EP2016/073453
(87) Internationale Veröffentlichungsnummer: WO 2017/055571

(56) Entgegenhaltungen:
- WO-A1-2007/065608
- US-A1- 2006 162 452
- US-A1- 2008 122 308

## Beschreibung

Die Erfindung betrifft eine Lageranordnung, eine Magnetschwebeanordnung und ein Verfahren zur Lagerung eines Achselements. Insbesondere betrifft die Erfindung eine magnetische Lageranordnung sowie verschiedene Aspekte von Magnetschwebeanordnungen.

Eine Magnetschwebeanordnung als Teil einer Magnetschwebewaage ist bspw. offenbart in der DE 10 2009 009 204 A1. Darin werden ein Verfahren und eine Vorrichtung zur Schweberegelung eines Schwebeteils offenbart, bspw. bei einer Magnetschwebewaage. Das Schwebeteil umfasst ein Magnetelement und einen Lagesensor. Ein Elektromagnet wird so angesteuert, dass er eine Kraftwirkung auf das Magnetelement ausübt.

Die WO 2007/065608 A1 beschreibt ein Magnetschwebesystem. Ein Dipolmagnet ist in einem zweidimensionalen oder dreidimensionalen statischen Quadrupol-Magnetfeld gehalten. In einer bevorzugten Ausführung ist ein geschlossener Regelkreis eines Servosystems mit Anti-Helmholtzspulen gebildet, bei dem der Strom, der proportional zur Masse ist, gemessen wird. Dabei wird der Dipolmagnet passiv stabilisiert durch ein diamagnetisches Material, das in einem Stabilisierungsmagnetfeld eingebettet ist. Das Stabilisierungsmagnetfeld, in dem sich das diamagnetische Material befindet, ist bevorzugt ein Quadrupol-Feld.

Es kann als Aufgabe der Erfindung angesehen werden, eine Lageranordnung und ein Verfahren zur Lagerung eines Achselements sowie eine Magnetschwebeanordnung anzugeben, mit denen eine gute Stabilisierung erreicht werden kann.

Diese Aufgabe wird gemäß einem ersten Aspekt der Erfindung gelöst durch eine Lager-anordnung gemäß Anspruch 1, eine hiermit ausgerüstete Magnetschwebeanordnung gemäß Anspruch 10 und ein Verfahren zur Lagerung eines Achselements gemäß Anspruch 13. Gemäß einem zweiten Aspekt der Erfindung wird die Aufgabe gelöst durch eine Magnetschwebeanordnung gemäß Anspruch 14. Gemäß einem dritten Aspekt der Erfindung wird die Aufgabe gelöst durch eine Magnetschwebeanordnung gemäß Anspruch 15. Dabei sind die drei Aspekte der Erfindung jeweils für sich bereits vorteilhaft verwendbar, insbesondere aber geeignet kombinierbar.

Bei der erfindungsgemäßen Lageranordnung und dem erfindungsgemäßen Verfahren zur Lagerung eines Achselements gemäß dem ersten Aspekt der Erfindung sind eine erste und eine zweite Magnetanordnung zur Lagerung eines diamagnetischen Elements auf einer Längsachse vorgesehen. Die beiden Magnetanordnungen sind jeweils zur Erzeugung von Quadrupol-Magnetfeldern in zugeordneten ersten und zweiten Ebenen ausgebildet, d. h. die erste Magnetanordnung erzeugt ein erstes Quadrupol-Magnetfeld in einer ersten Ebene und die zweite Magnetanordnung ein zweites Quadrupol-Magnetfeld in einer zweiten Ebene. Die erste und zweite Ebene sind parallel zueinander in einem Abstand angeordnet. Eine Längsachse, auf der das diamagnetische Element angeordnet ist, verläuft rechtwinklig zu den Ebenen durch die Zentren der Quadrupol-Magnetfelder hindurch.

Bei dieser Anordnung kann eine berührungsfreie und damit reibungslose Lagerung des diamagnetischen Elements durch die Quadrupol-Magnetfelder erzielt werden. Aufgrund der diamagnetischen Eigenschaften wird das diamagnetische Element in den beiden längs hintereinander angeordneten Quadrupol-Magnetfeldern auf der Längsachse zentriert. Das diamagnetische Element und jedes an diesem angebrachte Bauteil, bspw. eine Achse, Welle, Schwebeteil oder ein anderes Element, kann so berührungsfrei auf der Längsachse gelagert werden. Die Lagerung erlaubt dabei eine freie Beweglichkeit in Längsrichtung. Auch eine reibungsfreie Drehung um die Längsachse ist möglich. Insbesondere kann die Lagerung so aufgebaut sein, dass keine Kräfte in Längsrichtung auf das diamagnetische Element wirken.

Erfindungsgemäß sind dabei die erste und zweite Magnetanordnung relativ zueinander so angeordnet, dass das erste und das zweite Quadrupol-Magnetfeld zueinander verdreht sind. Dabei ist der Winkel der Verdrehung kein ganzzahliges Vielfaches von 90°. Die beiden Quadrupol-Magnetfelder sind somit in Richtung der Längsachse parallel nebeneinander, aber gegeneinander verdreht angeordnet.

Bei einem Quadrupol-Magnetfeld ergeben sich in einer Ebene zwischen den vier Polen winklig zueinander angeordnete Magnetfeldachsen. Die Verdrehung der Quadrupol-Magnetfelder um einen Winkelbetrag, der kein ganzzahliges Vielfaches von 90° ist, führt so zu einer Anordnung, bei der diese Magnetfeldachsen in Längsrichtung gesehen nicht fluchten, sondern zueinander versetzt sind. Hierdurch wird eine besonders gute Stabilisierung des Dipol-Elements erreicht, dessen Position anderenfalls, wie die Erfinder festgestellt haben, in Richtung der Magnetfeldachsen unter Umständen nicht ausreichend stabilisiert sein kann. Durch die verdrehte Anordnung ergeben sich in der Summe Lagerkräfte auf das diamagnetische Element, die für eine gute Zentrierung und Stabilisierung auf der Längsachse sorgen.

Während dieser Effekt prinzipiell bereits bei jedem Winkelbetrag der Verdrehung erreicht wird, der größer als 0° und kein ganzzahliges Vielfaches von 90° ist, hat es sich in der Praxis als günstig erwiesen, wenn der Verdrehwinkel bspw. 5° - 85° beträgt, bevorzugt 10° - 80°. Bei nur zwei Magnetanordnungen ist ein Winkel der Verdrehung von 45° +/- 20° oder einem ungeradzahligen Vielfachen hiervon besonders günstig. Dann stehen die Magnetfeldachsen der längs nebeneinander angeordneten Quadrupol-Magnetfelder in einem maximalen Winkel zueinander, so dass der Stabilisierungseffekt besonders deutlich ist. Bei mehr als zwei nebeneinander angeordneten Magnetanordnungen werden eher geringere Winkel der Verdrehung von bspw. 10° - 30° bevorzugt. Beispielsweise bei vier Magnetanordnungen werden Winkel der Verdrehung von jeweils 20° - 25° bevorzugt.

Jede Magnetanordnung kann bevorzugt aus einer Mehrzahl von Magnetelementen gebildet sein, bspw. aus vier oder mehr, bevorzugt acht oder mehr einzelnen Magnetelementen. Die Magnetelemente sind bevorzugt Permanentmagnetelemente. Bevorzugt sind dabei Magnetelemente mit radial und/oder tangential ausgerichteter Magnetisierung vorgesehen, um das gewünschte Quadrupol-Magnetfeld zu erzeugen. Besonders bevorzugt ist die Magnetisierungsrichtung der Magnetelemente so, dass sie keine Komponente in axialer Richtung aufweist.

Dabei kann jede Magnetanordnung bevorzugt mehrere um die Längsachse herum angeordnete Magnetsegmentelemente aufweisen. Die Magnetsegmentelemente können bspw. ringförmig um ein freies Zentrum herum angeordnet sein. Dabei sind Magnetsegmentelemente bevorzugt, die im Querschnitt eine Trapezform aufweisen.

Gemäß einer Weiterbildung der Erfindung können Magnetsegmentelemente in Halbach-Geometrie angeordnet sein. Bei einer Halbach-Anordnung sind Segmente von Permanentmagneten mit unterschiedlicher magnetischer Orientierung direkt nebeneinander so angeordnet, dass sich der magnetische Fluss zu einer Seite verstärkt. Bei der hier bevorzugten ringförmigen Halbach-Anordnung sind die Magnetisierungsrichtungen nach Art einer entlang des Rings rotierenden magnetischen Orientierung so angeordnet, dass sich der magnetische Fluss im Zentrum verstärkt.

Im Fall der Verwendung von Magnetanordnungen aus Magnetsegmentelementen kann die Verdrehung relativ zueinander bspw. durch eine fluchtende Anordnung von Magnetsegmentelementen beider Magnetanordnungen, dabei aber zwischen den Magnetanordnungen voneinander abweichender magnetischer Orientierung erreicht werden. Eine solche Anordnung kann baulich einfach sein. Bevorzugt sind die Magnetsegmentelemente beider Magnetanordnungen so ausgebildet, dass sie sich um einen jeweils gleich großen Winkelbereich um die Längsachse herum erstrecken. Der Winkelbetrag der Verdrehung kann dann einem ganzzahligen Vielfachen des Winkelbereiches eines Magnetsegments entsprechen. Bei einer bevorzugten Anordnung von bspw. acht Magnetsegmentelementen, die sich jeweils um die Längsachse herum über einen Winkelbereich von 45° erstrecken, wird durch einen Versatz der Magnetanordnungen zueinander um ein Magnetsegmentelement ein bevorzugter Winkelbetrag der Verdrehung von bspw. 45° erreicht.

Durch die erfindungsgemäß vorgesehenen mindestens zwei Magnetanordnungen wird bereits eine verbesserte Stabilisierung des diamagnetischen Elements erreicht. Diese kann noch weiter verbessert werden, indem durch eine dritte Magnetanordnung ein drittes Quadrupol-Magnetfeld in einer dritten, parallelen Ebene und weiter bevorzugt durch eine vierte Magnetanordnung ein viertes Quadrupol-Magnetfeld in einer vierten parallelen Ebene erzeugt wird. Es können entlang der Längsachse auch noch weitere Quadrupol-Magnetfelder angeordnet sein. Dabei sind bevorzugt entlang der Achse nebeneinander angeordnete Quadrupol-Magnetfelder jeweils gegeneinander um einen Winkelbetrag verdreht, der kein ganzzahliges Vielfaches von 90° ist, auch wenn es zur Erzielung des Stabilisierungseffektes bereits ausreicht, wenn eine solche Verdrehung zwischen zwei beliebigen im Abstand zueinander angeordneten Magnetanordnungen gegeben ist, unabhängig von der Ausrichtung dazwischen angeordneter Magnetanordnungen. Bei drei oder mehr Magnetanordnungen, und auch bei vier oder mehr Magnetanordnungen, sind bevorzugt alle Magnetanordnungen jeweils paarweise um einen Winkelbetrag gegeneinander gedreht, der kein ganzzahliges Vielfaches von 90° ist. So ist zwischen allen Magnetfeldachsen in den jeweiligen Ebenen stets ein Versatz gegeben, so dass die Stabilisierungswirkung optimiert ist.

Das diamagnetische Element kann bspw. zylindrische Form aufweisen. Es kann, bspw. um eine Gewichtseinsparung zu erzielen, kurz ausgebildet sein, bspw. eine Länge aufweisen, die geringer ist als der Abstand zwischen der ersten und zweiten Ebene. Gemäß einer Weiterbildung der Erfindung weist es allerdings bevorzugt eine Länge auf, die größer ist als der Abstand zwischen der ersten und zweiten Ebene. D. h., das diamagnetische Element erstreckt sich entlang der Längsachse durch die Ebenen der beiden Quadrupol-Magnetfelder hindurch. Hierdurch kann erreicht werden, dass auch bei einer Lageänderung in Längsrichtung keine bzw. nur möglichst geringe Kräfte in dieser Richtung wirken. Im Fall weiterer längs angeordneter Quadrupol-Magnetfelder ist weiter bevorzugt, dass das diamagnetische Element sich entlang der Längsachse auch durch die jeweiligen parallelen Ebenen hindurch erstreckt.

Die beschriebene Lageranordnung kann insbesondere Anwendung finden in einer Magnetschwebeanordnung. Dabei ist mindestens eine erste Lageranordnung zur Lagerung eines vertikal ausgerichteten Schwebeelements vorgesehen, d. h. die Längsachse ist vertikal und die Ebenen der Magnetanordnungen sind horizontal ausgerichtet. An dem sich vertikal erstreckenden Schwebeelement ist das diamagnetische Element angebracht.

Weiter ist mindestens eine Hubanordnung für das Schwebeelement vorgesehen. Diese umfasst mindestens ein am Schwebeelement angeordnetes Hubmagnetelement, bevorzugt ein Permanentmagnetelement, das vertikal, also in Längsrichtung des Schwebeelements magnetisiert ist. Weiter umfasst die Hubanordnung mindestens eine Hubspule und/oder ein oder mehrere Permanentmagnetelemente, um ein Hubmagnetfeld zu erzeugen, durch das eine auf das Hubmagnetelement und so auf das Schwebeelement wirkende Hubkraft erzeugt wird.

Die erfindungsgemäße Lageranordnung eignet sich besonders gut zur Verwendung in einer solchen Magnetschwebeanordnung. Durch die horizontal wirkenden Magnetanordnungen wird das Schwebeelement in seiner vertikalen Ausrichtung stabilisiert und zentriert. Die Lageranordnung kann bevorzugt so ausgebildet sein, dass hiervon ausgehend keine in vertikaler Richtung wirkende Kraft auf das Schwebeelement erzeugt wird.

Die in vertikaler Richtung wirkende Hubkraft kann so geregelt werden, dass das Schwebeelement schwebend, d. h. in vertikaler Richtung an einer festen Position gehalten wird. Dies kann insbesondere durch eine Regelung mit einem Positionssensor für die vertikale Position des Schwebeelements erreicht werden, mit der bspw. eine oder mehrere Hubspulen bestromt werden.

Eine derartige Magnetschwebeanordnung kann insbesondere für Messzwecke eingesetzt werden, bspw. in einer Magnetschwebewaage zur Messung der Gewichtskraft und damit der Masse einer am Schwebeelement aufgenommenen Probe oder zur Messung anderer auf das Schwebeelement wirkender Kräfte, die dieses bspw. in einem strömenden Medium erfährt.

Messungen, insbesondere der Gewichtskraft oder anderer auf das Schwebeelement wirkender Kräfte, können bspw. durch eine externe Wägezelle erfolgen, die mit den Hubelementen, d. h. mit der Hubspule und/oder den Permanentmagnetelementen gekoppelt ist. Bevorzugt ist allerdings eine Messung derartiger Kräfte durch eine Messung des Stroms durch die Hubspule oder die Hubspulen.

In bevorzugten Ausführungsformen ist mindestens eine Hubspule und/oder mindestens ein ringförmiger Permanentmagnet um das Schwebeelement herum angeordnet. Besonders bevorzugt sind zwei Hubspulen und/oder Ringmagnete axial beabstandet vorgesehen, zwischen denen das Hubmagnetelement angeordnet ist. Die Hubspulen können insbesondere als Anti-Helmholtzspulen bestromt werden, um ein geeignetes Hubmagnetfeld zu erzeugen. Ringmagnete sind bevorzugt in axialer, entgegengesetzter Richtung magnetisiert, so dass bevorzugt ein ähnliches magnetisches Feld wie das der Hubspulen erzeugt wird. Bei einer Hybrid-Anordnung mit Hubspulen und Permanentmagnetelementen überlagern und verstärken sich so die Feldanteile in bevorzugter Weise.

Gemäß einer Weiterbildung der Erfindung kann bei einer Magnetschwebeanordnung im Abstand von der ersten magnetischen Lageranordnung auch eine zweite magnetische Lageranordnung so vorgesehen sein, dass die Hubanordnung mindestens zum Teil zwischen der ersten und der zweiten Lageranordnung angeordnet ist. So kann ein bevorzugt durchgehendes Schwebeelement besonders gut stabilisiert werden.

Während hierbei die Verwendung der speziellen, erfindungsgemäßen Lageranordnungen mit zueinander verdrehten Quadrupol-Magnetfeldern bevorzugt wird, ergibt sich durch die Anordnung von zwei Magnetlagern ober- und unterhalb der Hubanordnung einer Magnetschwebeanordnung auch bereits bei Verwendung einfacher Quadrupol-Magnetanordnungen eine für viele Zwecke ausreichende Stabilisierung. Daher wird dieser zweite Aspekt der Erfindung gemäß Anspruch 13 auch unabhängig von der Verwendung der speziellen Lageranordnungen als separat vorteilhaft angesehen.

In einer weiter bevorzugten Ausführungsform einer Magnetschwebeanordnung kann das Schwebeelement als durchgehender Stab aus einem keramischen Material ausgebildet sein. Dabei ist es bevorzugt, dass mindestens ein auf dem Schwebeelement angebrachtes diamagnetisches Element und/oder das am Schwebeelement vorgesehene Hubmagnetelement ringförmig ausgebildet und um den durchgehenden Stab herum angeordnet ist. Ein solcher Aufbau hat sich als besonders geeignet erwiesen. Bevorzugt sind alle am Schwebeelement vorgesehenen elektrisch oder magnetisch wirkenden Elemente ringförmig aufgebaut und um einen durchgehenden Keramikstab herum angeordnet, insbesondere das diamagnetische Element mindestens einer ersten Lageranordnung sowie das Hubmagnetelement. Weiter bevorzugt gilt dies bei Verwendung eines zweiten Lagers auch für das zweite diamagnetische Element sowie für ein am Schwebeelement angeordnetes Teil eines bspw. optischen, elektrischen oder magnetischen Positionssensors.

Auch dieser Aspekt des Aufbaus einer Magnetschwebeanordnung bietet zwar besondere Vorteile in Kombination mit der speziellen Lageranordnung gemäß dem ersten Aspekt der Erfindung und der Stabilisierung durch zwei Lager gemäß dem zweiten Aspekt der Erfindung, ist jedoch auch für sich gesehen bereits vorteilhaft. Dieser dritte Aspekt der Erfindung gemäß Anspruch 14 kann daher auch unabhängig vom speziellen Aufbau der Lageranordnungen gemäß dem ersten Aspekt der Erfindung und der Verwendung von zwei im Abstand angeordneten Lageranordnungen gemäß dem zweiten Aspekt der Erfindung genutzt werden.

Nachfolgend werden Ausführungsformen der Erfindung anhand von Zeichnungen näher beschreiben. Dabei zeigen:
- Fig. 1: in schematischer Darstellung einen Längsschnitt durch eine Magnetschwebeanordnung einer Magnetschwebewaage;
- Fig. 2: in Seitenansicht eine Lageranordnung der Magnetschwebeanordnung gemäß Fig. 1;
- Fig. 3: eine Frontansicht einer Magnetanordnung der Lageranordnung aus Fig. 2;
- Fig. 4: eine schematische Darstellung eines Quadrupol-Magnetfelds der Magnetanordnung aus Fig. 3;
- Fig. 5: eine schematische, auseinandergezogene Darstellung von zwei Magnetanordnungen;
- Fig. 6, 7: in schematischer Darstellung von Längsschnitten eine erste und eine zweite Ausführungsform einer Anordnung zur Messung von Strömungskräften.

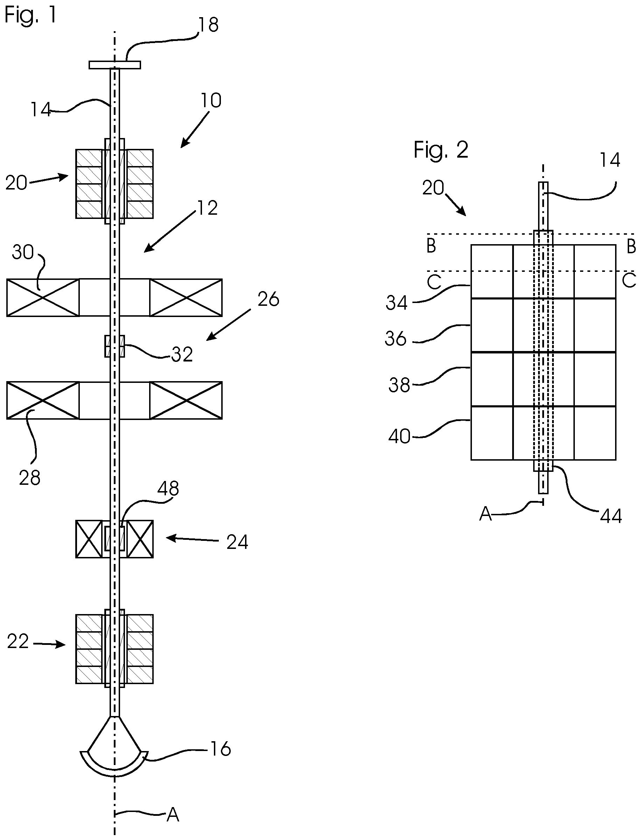

Fig. 1 zeigt einen Längsschnitt durch eine Magnetschwebeanordnung 10. Dabei ist die Darstellung in Fig. 1 sowie in den nachfolgenden Figuren jeweils schematisch zu verstehen, mit dem Ziel einer guten Verständlichkeit des grundsätzlichen Aufbaus und der wichtigsten Komponenten der Anordnung, wobei tatsächliche Vorrichtungen eine Vielzahl weiterer Elemente wie Gehäuse etc. aufweisen. Insbesondere sind die Darstellungen nicht maßstabsgerecht.

Die Magnetschwebeanordnung 10 umfasst ein vertikal ausgerichtetes Schwebeteil 12 mit einem durchgehenden, länglichen Keramikstab 14. Das Schwebeteil 12 ist frei schwebend innerhalb von stationären Elementen angeordnet, die im Einzelnen nachfolgend beschrieben werden. Dabei ist die Magnetschwebeanordnung 10 im gezeigten Beispiel zur Verwendung als Schwebewaage ausgebildet mit beispielhaft dargestellter unterschaliger Probenaufnahme 16 und oberschaliger Probenaufnahme 18. Die Verwendung der Magnetschwebeanordnung 12 als Schwebewaage stellt jedoch nur ein Beispiel dar; tatsächlich lässt sich die nachfolgend beschriebene Anordnung auch für andere Zwecke nutzen.

Die Magnetschwebeanordnung 10 weist ein oberes Lager 20 und ein unteres Lager 22, einen Positionssensor 24 und eine Hubanordnung 26 auf.

Die Hubanordnung 26 dient dazu, das Schwebeteil 12 in einer gewünschten vertikalen Schwebeposition zu halten. Hierzu wird dessen Gewichtskraft durch eine entgegenwirkende magnetische Kraft kompensiert. Mittels des Sensors 24 wird die vertikale Position des Schwebeteils 12 ermittelt, so dass die Hubanordnung 26 zur Einstellung der Schwebelage geregelt werden kann. Im gezeigten Beispiel ist der Sensor 24 ein induktiver Sensor, bei dem die Stellung eines Indexelements 48 am Schwebeteil 12 gegenüber stationären Sensorspulen berührungsfrei ermittelt wird.

Die Hubanordnung 26 umfasst im gezeigten Beispiel zwei Hubspulen 28, 30, die im Abstand voneinander koaxial um das Schwebeelement 12 herum angeordnet sind. Zwischen den Hubspulen 28, 30 ist am Schwebeteil 12 ein magnetisches Dipolelement 32 als Hubmagnetelement angeordnet. Das Hubmagnetelement 32 ist ein ringförmiges, um den Keramikstab 14 des Schwebeteils 12 herum angeordnetes Permanentmagnetelement, das in Längsrichtung des Schwebeteils 12 magnetisiert ist.

Die Hubspulen 28, 30 werden durch eine Ansteuervorrichtung (nicht dargestellt) mit einem geregelten Strom versorgt. Sie sind dabei als Anti-Helmholtzspulen geschaltet und erzeugen so ein Hubmagnetfeld, das eine der Gewichtskraft entgegengesetzte Hubkraft auf das Hubmagnetelement 32 und somit auf das Schwebeteil 12 ausübt. Die Ansteuervorrichtung erhält dabei ein Positionssignal des Positionssensors 24 und regelt den Strom durch die Hubspulen 28, 30 so, dass eine feste Schwebelage eingenommen und gehalten, also die Gewichtskraft exakt kompensiert wird.

Zur Verwendung als Magnetschwebewaage kann dann der Strom durch die Hubspulen 28, 30 gemessen werden. Dieser ist proportional zur Gewichtskraft und damit zur Masse des Schwebeteils 12, so dass die Masse von an den Aufnahmen 16, 18 aufgenommenen Proben ermittelt werden kann.

In einer alternativen Ausführungsform (in Fig. 1 nicht dargestellt) kann die Hubanordnung 26 zusätzlich oder auch alternativ zu den Hubspulen 28, 30 Permanentmagnetelemente umfassen. Bevorzugt sind zwei axial im Abstand voneinander angeordnete ringförmige Permanentmagnete jeweils um das Schwebeelement 12 herum angeordnet, zwischen denen sich am Schwebeteil 12 das Hubmagnetelement 32 befindet. Die ringförmigen Permanentmagnetelemente sind dabei bevorzugt axial gegensätzlich magnetisiert. Eine hybride Hubanordnung mit Hubspulen und Permanentmagneten ist bspw. offenbart in der WO 2007/065603 A1. Hierauf wird bezüglich der Anordnung und Ausbildung der Permanentmagneten und der Hubspulen zueinander ausdrücklich Bezug genommen.

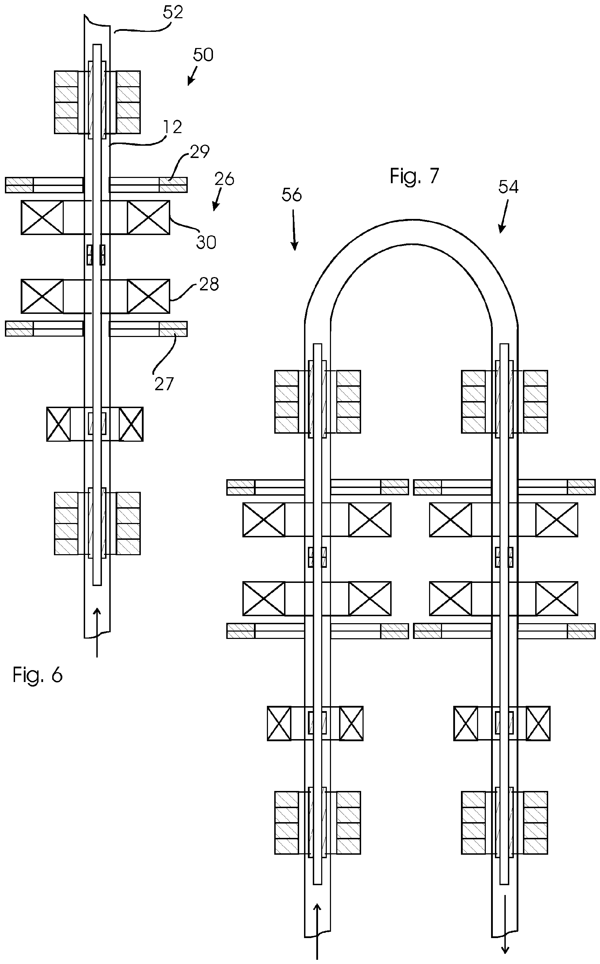

Fig. 6 zeigt ein weiteres Beispiel einer derartigen hybriden Hubanordnung mit bspw. zwei Hubspulen 28, 30 und zwei Permanentmagnetringen 27, 29, bei der bevorzugt die Feldstärken so ausgelegt sind, dass die Gewichtskraft des Schwebeteils 12 bereits vollständig durch die Hubkraft der Permanentmagnetelemente 27, 29 kompensiert wird. Bei Gewichtsänderungen, bspw. durch Proben auf den Aufnahmen 16, 18, in Fig. 1, kann die hiervon ausgehende zusätzliche Gewichtskraft dann durch die Hubspulen 28, 30 kompensiert werden.

In einer weiteren, alternativen Anordnung (nicht dargestellt) sind keine Hubspulen vorgesehen, sondern es ist durch zwei im Abstand zueinander angeordnete Magnetringe wie oben beschrieben ein rein passives Magnetlager gebildet. In diesem Fall entfällt auch der Sensor 24 und es findet keine aktive Positionsregelung statt, stattdessen kann das Schwebeteil 12 bspw. mit einer externen Wägezelle gekoppelt sein.

Der prinzipielle Aufbau einer Schwebeanordnung wie in Fig. 1 ist ebenso wie Details zum Betrieb beschrieben in der WO 2007/065608 A1, auf die diesbezüglich ausdrücklich Bezug genommen werden soll. Daher wird auf eine weiter detaillierte Beschreibung der Schwebefunktion und der Verwendung als Schwebewaage verzichtet. Nachfolgend werden stattdessen einige wichtige Aspekte des Aufbaus der Magnetschwebeanordnung 10 erläutert.

Während die Position des Schwebeteils 12 innerhalb der Magnetschwebanordnung 10 im dargestellten Beispiel in vertikaler Richtung durch die elektromagnetische Hubanordnung 26 bspw. aktiv geregelt wird (oder in der beschriebenen, nicht dargestellten alternativen Ausführung die Position des Schwebeteils in vertikaler Richtung auch durch ein passives Magnetlager gehalten werden kann), sind die Lager 20, 22 dazu vorgesehen, das Schwebeteil 12 auf einer Längsmittelachse A zu zentrieren. Die Lager 20, 22 sind, wie aus der nachfolgenden detaillierten Beschreibung ersichtlich wird, magnetische Lager, die das Schwebeteil 12 berührungsfrei auf der Achse A halten. Durch die Anordnung von zwei Lagern 20, 22 im Abstand voneinander und wie dargestellt ober- und unterhalb der Hubanordnung 26 wird so eine gute Stabilisierung des Schwebeteils 12 erreicht. In Verbindung mit dem durchgehenden, starren Keramikstab 14 werden durch die Lager 20, 22 Fehlstellungen wie horizontale Verschiebungen oder Schrägstellungen vermieden.

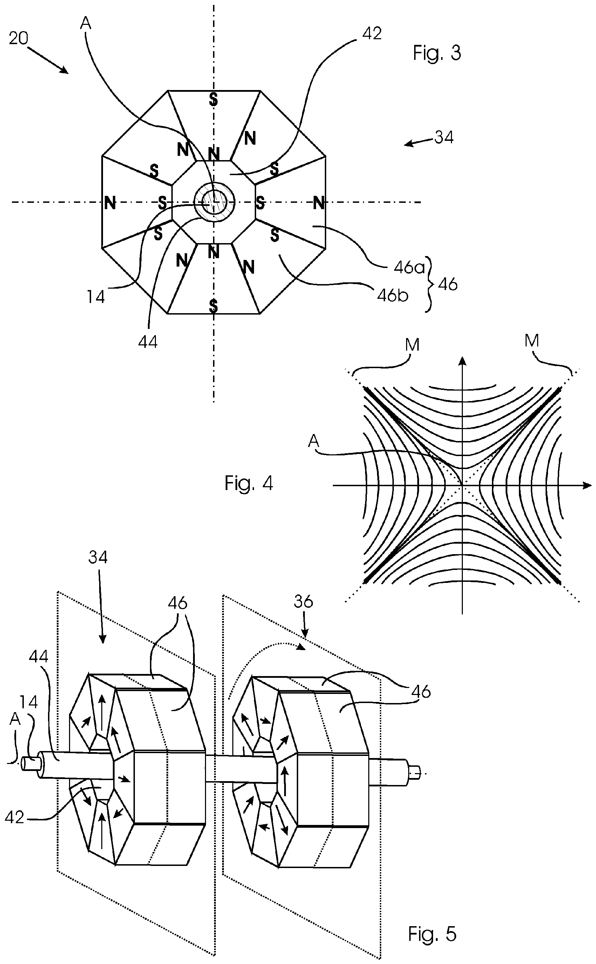

Fig. 2 zeigt ein Lager 20 in Seitenansicht; in Fig. 3 ist das Lager 20 in Draufsicht dargestellt mit einem Querschnitt durch das Schwebeteil 12 entlang der Ebene B..B in Fig. 2. Wie aus den Zeichnungen ersichtlich weist das Lager 20 auf der stationären Seite vertikal übereinander vier Magnetanordnungen 34, 36, 38, 40 auf, mit einer durchgehenden mittleren Öffnung 42, in der der Stab 14 des Schwebeteils 12 aufgenommen ist.

Ringförmig um den Stab 12 herum ist ein zylindrisches, ringförmiges Element 44 aus diamagnetischem Material, bspw. Graphit vorgesehen. Das diamagnetische Element 44 ist im gezeigten Beispiel länger als das Lager 20 und reicht durch die Magnetanordnungen 34, 36, 38, 40 hindurch. In einer alternativen Ausführungsform (nicht dargestellt) ist das diamagnetische Element axial erheblich kürzer als dargestellt, insbesondere kürzer als der axiale Abstand der mittleren Ebenen zweier nebeneinander angeordneter Magnetanordnungen 34, 36, 38, 40.

Die Magnetanordnungen 34, 36, 38, 40, von denen in Fig. 3 die oberste Magnetanordnung 34 sichtbar ist, sind aus Magnetsegmentelementen 46 zusammengesetzt. Diese sind so angeordnet, dass im Innenbereich 42 ein starkes Quadrupol-Magnetfeld wirkt.

Im dargestellten Beispiel bilden die Magnetsegmentlemente 46 eine Halbach-Anordnung. Bei der dargestellten Anordnung mit acht Segmenten umfasst jede der Magnetanordnungen 34, 36, 38, 40 acht Magnetsegmentelemente 46 mit trapezförmigem Querschnitt. Die Magnetsegmentelemente 46 sind unmittelbar nebeneinander angeordnet, so dass sie einen Ring um die Längsmittelachse A bilden, wobei jedes Magnetsegmentelement 46 einen Winkelbereich von 45° um die Achse A herum abdeckt.

Die Magnetisierungsrichtung der Magnetsegmentelemente 46 unterscheidet sich dabei wie in Fig. 3 dargestellt zwischen nebeneinander angeordneten Magnetsegmentelementen 46 in der Art, dass sich eine entlang des daraus gebildeten Rings rotierende Magnetisierung ergibt. Dazu umfassen die Magnetsegmentelemente 46 verschiedene Typen, nämlich Magnetsegmentelemente 46a, 46c mit radialer Magnetisierung und Magnetsegmentelemente 46b mit tangentialer Magnetisierung. Die radial magnetisierten Magnetsegmentelemente 46a, 46c sind zueinander gegensätzlich radial magnetisiert, d. h. die einen weisen einen inneren Südpol und die anderen einen inneren Nordpol auf. Die tangential magnetisierten Magnetsegmentelemente 46b sind identisch, werden aber wie dargestellt in zwei verschiedenen Drehlagen angeordnet. Jeweils nebeneinander angeordnete Magnetsegmentelemente 46a, 46b sind von unterschiedlichem Typ (radiale / tangentiale Magnetisierung) und weisen gegensätzliche Magnetisierungsrichtung auf. Jeweils gegenüberliegende Magnetsegmentelemente 46 sind von gleichem Typ (radiale / tangentiale Magnetisierung) und weisen ebenfalls gegensätzliche, d. h. um 180° in der Ebene gedrehte Magnetisierungsrichtungen auf. Hierdurch entsteht im freien Innenbereich 42 in einer mittleren Ebene (dargestellt als Ebene C.C in Fig. 2) ein Quadrupol-Magnetfeld.

Eine entsprechende Feldverteilung in der Ebene ist schematisch in Fig. 4 dargestellt. Dabei ergibt sich auf der Längsmittelachse A im Zentrum der Ebene ein Minimum der magnetischen Feldstärke, so dass das diamagnetische Element 44 am Stab 14 des Schwebeteils 12 dort zentriert wird.

Bei der bevorzugten Anordnung weist keines der Magnetsegmentelemente 46 eine axiale Magnetisierung auf, so dass sich in der jeweils betrachteten Mittelebene keine Magnetfeldkomponente in axialer Richtung ergibt. So ergibt sich eine Kraftwirkung auf das diamagnetische Element 44 ausschließlich in Querrichtung, nicht aber in axialer Richtung. Beispielsweise bei der Verwendung des Lagers in einer Schwebewaage wird so eine Verfälschung des Meßergebnisses vermieden.

Allerdings hat sich herausgestellt, dass im Fall von Auslenkungen des diamagnetischen Elements 44 aus der Längsmittelachse A nicht an allen Stellen des Innenraums 42 die gleichen Rückstellkräfte wirken. Wie aus Fig. 4 ersichtlich, lassen sich zwischen den vier Polen des Magnetfelds in der mittleren Ebene der Magnetanordnung 34 Magnetfeldachsen M definieren. Wie sich gezeigt hat, wird das diamagnetische Element 44 bei einer Auslenkung entlang der Achsen M in geringerem Maße auf die Achse A zurückgestellt als bei einer Auslenkung in andere Richtungen.

Daher ist das Lager 20 mit den vier Magnetanordnungen 34, 36, 38, 40 nebeneinander entlang der Achse A so aufgebaut, dass jeweils benachbart angeordnete Magnetsegmentelemente 34, 36, 38, 40 nicht mit gleicher magnetischer Orientierung, sondern verdreht zueinander vorgesehen sind.

In Fig. 5 ist dies schematisch in einer auseinandergezogenen Darstellung von zwei nebeneinander auf der Achse A angeordneten Magnetanordnungen 34, 36 gezeigt. Dabei sind die Magnetanordnungen 34, 36 zum besseren Verständnis im Abstand voneinander dargestellt, während sie wie aus Fig. 2 ersichtlich bevorzugt axial direkt nebeneinander angeordnet werden.

Wie aus Fig. 5 ersichtlich, weisen die von den jeweiligen Magnetsegmentelementen 46 gebildeten Ringe beider Magnetanordnungen 34, 36 jeweils dieselbe Abfolge unterschiedlicher Magnetisierungen auf, allerdings ist die in Fig. 5 rechts dargestellte zweite Magnetanordnung 36 gegenüber der links dargestellten ersten Magnetanordnung 34 um ein Magnetsegmentelement 46 um die Achse A im Uhrzeigersinn gedreht. In den jeweils in Fig. 5 gepunktet dargestellten Ebenen der Magnetanordnungen 34, 36 ergibt sich somit im Innenbereich 42 jeweils dieselbe Feldverteilung wie in Fig. 4, allerdings gegeneinander um 45° um die Achse A gedreht.

Bei einer Ansicht entlang der Achse A liegen die jeweiligen Feldachsen M der in den Ebenen der Magnetanordnungen 34, 36 wirkenden Magnetfelder somit nicht fluchtend, sondern sind gegeneinander um 45° versetzt.

Hieraus ergibt sich eine besonders gute Zentrierung durch die Kraftwirkung der beiden nebeneinander vorgesehenen Magnetanordnungen 34, 36 auf das durchgehende diamagnetische Element 44.

Im gezeigten Beispiel sind die vier Magnetanordnungen 34, 36, 38, 40 jeweils um den Winkelbereich eines Magnetsegmentelements 46, d. h. um 45°, gegeneinander um die Achse A verdreht. Hierdurch fluchten die Magnetanordnungen, so dass sich ein einfacher Aufbau ergibt. Durch den Versatz der jeweiligen Magnetfelder in den mittleren Ebenen wird das diamagnetische Element 44 und damit der Stab 14 des Schwebeteils 12 in dem Lager 20 gut zentriert, wobei auch bei Auslenkung in Richtung der Feldachsen M eine Rückstellung und Zentrierung erfolgt.

Allerdings ergibt sich bei einer Verdrehung jeweils nebeneinander angeordneter Magnetanordnungen 34, 36, 38, 40 um 45° eine fluchtende Anordnung der Feldachsen zwischen der ersten und dritten Magnetanordnung 34, 38 sowie zwischen der zweiten und vierten Magnetanordnung 36, 40. Eine noch bessere Zentrierung wird bei einer Anordnung erreicht, bei der die Feldachsen M aller vier Magnetanordnungen 34, 36, 38, 40 jeweils paarweise nicht fluchtend sind, bspw. bei einer Verdrehung von jeweils 20° - 25° nebeneinander angeordneter Magnetanordnungen 34, 36, 38, 40 zueinander.

Das untere Magnetlager 22 der Magnetschwebeanordnung 10 (Fig. 1) ist gleich aufgebaut wie das obere Magnetlager 20. In beiden Magnetlagern 20, 22 erzeugen jeweils vier Magnetanordnungen gegeneinander verdrehte Quadrupol-Magnetfelder, durch die diamagnetische Elemente 44 auf der Längsachse A zentriert werden.

Die diamagnetischen Elemente 44 beider Lager 20, 22 sind dabei als Ringelemente bzw. als kreiszylindrische Elemente mit mittlerer Bohrung ausgebildet und um den durchgehenden Stab 14 des Schwebeteils 12 herum angeordnet. Auch das Hubmagnetelement 32 und das am Schwebeteil befestigtes Indexelement 48 des Sensors 24 ist jeweils ringförmig bzw. zylindrisch mit mittlerer Bohrung ausgebildet und um den Stab 14 herum angeordnet. So können die jeweiligen Elemente 32, 44, 48 exakt am Schwebeteil 12 positioniert werden und dieses ist durch den durchgehenden Stab 14 ausreichend starr, um Verformungen auszuschließen.

Die obige Erläuterung des Ausführungsbeispiels aus Fig. 1 bis 5 ist lediglich beispielhaft und nicht beschränkend zu verstehen. Es sind Änderungen gegenüber den gezeigten Elementen und Anordnungen möglich. Bspw. kann ein Magnetlager 20, 22 eine abweichende Anzahl von Magnetanordnungen 34, 36, 38, 40 aufweisen, bspw. nur zwei gegeneinander verdrehte Magnetanordnungen oder mehr als die gezeigten vier Magnetanordnungen 34, 36, 38, 40. Auch die Anzahl von Magnetsegmentelementen 46 kann abweichen, ebenso wie der Drehwinkel zweier nebeneinander angeordneter Magnetanordnungen. Die Hubanordnung 26 kann eine andere Spulenanordnung sowie optional auch eines oder mehrere Permanentmagnetelemente zusätzlich oder statt der Hebespulen umfassen.

Neben der Verwendung der Magnetschwebeanordnung 10 als Magnetschwebewaage mit Probenaufnahmen 16, 18 wie in Fig. 1 gezeigt, sind auch andere Verwendungen möglich. Die Magnetschwebeanordnung 10 kann universell als Messzelle oder hochempfindlicher Kraftsensor für vertikale Kräfte eingesetzt werden, bspw. zur Messung von Dichte, Oberflächenspannung, Durchfluss, Dampfdruck, Viskosität etc. So zeigt beispielhaft Fig. 6 eine Magnetschwebeanordnung 50 mit dem oben beschriebenen Aufbau, bei der das Schwebeteil 12 in einem Rohr 52 angeordnet ist. Abweichend von dem in Fig. 1 gezeigten Aufbau ist dabei die Hubanordnung 26 zusätzlich zu den Hubspulen 28, 30 mit ringförmigen Permanentmagnetelementen 27, 29 versehen, deren Magnetisierung als Totlastkompensation so bemessen ist, dass sie die Gewichtskraft des Schwebeteils 12 kompensieren. Eine solche hybride Hubanordnung kann auch für andere Ausführungsformen verwendet werden.

Durch Erfassung der Kräfte kann bspw. simultan eine Messung der Durchflussgeschwindigkeit und der Dichte eines in dem Rohr 52 strömenden Mediums gemessen werden. Wie in Fig. 7 gezeigt, können zwei Magnetschwebeanordnungen 54, 56 an vertikalen Abschnitten desselben Rohrs vorgesehen sein, so dass bei der gemeinsamen Messung Gewichtskräfte leicht kompensiert werden können. Durch Addition der dabei gemessenen Kräfte kann - bei identisch ausgebildeten Schwebeteilen - die Dichte und durch Subtraktion simultan die Strömungskraft gemessen werden.

## Patentansprüche

1. Lageranordnung, mindestens umfassend
- eine erste Magnetanordnung (34) zur Erzeugung eines ersten Quadrupol-Magnetfelds in einer ersten Ebene und eine zweite Magnetanordnung (36) zur Erzeugung eines zweiten Quadrupol-Magnetfelds in einer zweiten Ebene, wobei die Quadrupol-Magnetfelder jeweils in den Ebenen zwischen vier Polen winklig zueinander angeordnete Magnetfeldachsen aufweisen,
- wobei die zweite Ebene zur ersten Ebene parallel angeordnet und eine Längsachse (A) rechtwinklig hierzu durch die Zentren der Quadrupol-Magnetfelder definiert ist,
- und mindestens ein diamagnetisches Element (44), das auf der Längsachse (A) angeordnet ist,
- wobei die erste und zweite Magnetanordnung (34, 36) relativ zueinander so angeordnet sind, dass das erste und das zweite Quadrupol-Magnetfeld zueinander um die Längsachse (A) um einen Winkelbetrag verdreht sind, der kein ganzzahliges Vielfaches von 90° ist.

2. Lageranordnung nach Anspruch 1, bei der
- das erste und das zweite Quadrupol-Magnetfeld um 5° bis 85° gegeneinander verdreht sind.

3. Lageranordnung nach einem der vorhergehenden Ansprüche, bei der
- die erste und/oder die zweite Magnetanordnung (34, 36) eine Anzahl von um das Zentrum herum angeordneten Magnetsegmentelementen (46) aufweist.

4. Lageranordnung nach Anspruch 3, bei der
- die Magnetsegmentelemente (46) in tangentialer und/oder radialer Richtung magnetisiert sind.

5. Lageranordnung nach Anspruch 3 oder 4, bei der
- die Magnetsegmentelemente (46) in Halbach-Geometrie angeordnet sind.

6. Lageranordnung nach einem der Ansprüche 3 - 5, bei der
- die Magnetsegmentelemente (46) so ausgebildet sind, dass sie sich um einen jeweils gleich großen Winkelbereich um die Längsachse (A) erstrecken,
- und der Winkelbetrag der Verdrehung einem ganzzahligen Vielfachen des Winkelbereichs eines Magnetsegmentelements (46) entspricht.

7. Lageranordnung nach einem der vorhergehenden Ansprüche, bei der
- eine dritte Magnetanordnung (38) vorgesehen ist zur Erzeugung eines dritten Quadrupol-Magnetfelds in einer dritten Ebene, die zur ersten und zweiten Ebene parallel angeordnet ist.

8. Lageranordnung nach Anspruch 7, bei der
- eine vierte Magnetanordnung (40) vorgesehen ist, zur Erzeugung eines vierten Quadrupol-Magnetfelds in einer vierten Ebene, die zur ersten, zweiten und dritten Ebene parallel angeordnet ist.

9. Lageranordnung nach einem der vorhergehenden Ansprüche, bei der
- das diamagnetische Element (44) eine Länge aufweist, die größer ist als der Abstand zwischen den Ebenen.

10. Magnetschwebeanordnung mit
- mindestens einer ersten Lageranordnung (20) nach einem der vorangehenden Ansprüche, wobei die Ebenen horizontal angeordnet und das diamagnetische Element (44) an einem sich vertikal erstreckenden Schwebeelement (12) angebracht ist,
- und mindestens einer Hubanordnung (26), die mindestens ein am Schwebeelement angeordnetes Hubmagnetelement (32) und mindestens eine Hubspule (28, 30) und/oder ein oder mehrere Permanentmagnetelemente (27, 29) umfasst, um eine auf das Schwebeelement (12) wirkende Hubkraft zu erzeugen.

11. Magnetschwebeanordnung nach Anspruch 10, bei der
- im Abstand von der ersten Lageranordnung (20) eine zweite Lageranordnung (22) mit mindestens einer Magnetanordnung (34, 36, 38, 40) zur Erzeugung eines Quadrupol-Magnetfeldes und mindestens einem diamagnetischen Element (44) im Zentrum des Quadrupol-Magnetfelds vorgesehen ist,
- wobei die Hubanordnung (26) zwischen der ersten und der zweiten Lageranordnung (20, 22) angeordnet ist.

12. Magnetschwebeanordnung nach Anspruch 10 oder 11, bei der
- das Schwebeelement (12) einen durchgehenden Stab (14) aus einem keramischen Material aufweist,
- und mindestens ein diamagnetisches Element (44) und/oder das Hubmagnetelement (32) ringförmig ausgebildet und um den durchgehenden Stab (14) herum angeordnet ist.

13. Verfahren zur Lagerung eines Achselements (14), bei dem
- mindestens ein diamagnetisches Element (44) auf einer Längsachse eines Lagers (20, 22) angeordnet wird,
- wobei das Lager (20, 22) mindestens eine erste Magnetanordnung (34) zur Erzeugung eines ersten Quadrupol-Magnetfelds in einer ersten Ebene und eine zweite Magnetanordnung (36) zur Erzeugung eines zweiten Quadrupol-Magnetfelds in einer zweiten Ebene umfasst, wobei die Quadrupol-Magnetfelder jeweils in den Ebenen zwischen vier Polen winklig zueinander angeordnete Magnetfeldachsen aufweisen,
- wobei die erste und zweite Magnetanordnung (34, 36) relativ zueinander so angeordnet sind, dass das erste und das zweite Quadrupol-Magnetfeld zueinander um die Längsachse (A) um einen Winkelbetrag verdreht sind, der kein ganzzahliges Vielfaches von 90° ist.

14. Magnetschwebeanordnung, mit
- einem sich vertikal erstreckenden Schwebeelement (12),
- mindestens einer ersten und einer zweiten Lageranordnung (20, 22), wobei die erste und zweite Lageranordnung (20, 22) jeweils mindestens eine Magnetanordnung (34) zur Erzeugung eines Quadrupol-Magnetfelds und mindestens ein diamagnetisches Element (44) im Zentrum des Quadrupol-Magnetfelds aufweist, wobei das diamagnetische Element (44) am Schwebeelement (12) angebracht ist,
- und mindestens einer Hubanordnung (26), wobei die Hubanordnung (26) mindestens ein Hubmagnetelement (32) am Schwebeelement (12) und mindestens eine Hubspule (28, 30) und/oder ein oder mehrere Permanentmagnetelemente (27, 29) umfasst, um eine auf das Schwebeelement (12) wirkende Hubkraft zu erzeugen,
- wobei die Hubanordnung (26) zwischen der ersten und der zweiten Lageranordnung (20, 22) angeordnet ist.

15. Magnetschwebeanordnung, mit
- einem sich vertikal erstreckenden Schwebeelement (12),
- mindestens einer ersten und einer zweiten Lageranordnung (20, 22), wobei die erste und zweite Lageranordnung (20, 22) jeweils mindestens eine Magnetanordnung (34) zur Erzeugung eines Quadrupol-Magnetfelds und mindestens ein diamagnetisches Element (44) im Zentrum des Quadrupol-Magnetfelds aufweist, wobei das diamagnetische Element (44) am Schwebeelement (12) angebracht ist,
- und mindestens einer Hubanordnung (26), wobei die Hubanordnung (26) mindestens ein Hubmagnetelement (32) am Schwebeelement (12) und mindestens eine Hubspule (28, 30) und/oder ein oder mehrere Permanentmagnetelemente (27, 29) umfasst, um eine auf das Schwebeelement (12) wirkende Hubkraft zu erzeugen,
- wobei das Schwebeelement (12) einen durchgehenden Stab (14) aus einem keramischen Material aufweist,
- und das diamagnetische Element (44) und/oder das Hubmagnetelement (32) ringförmig ausgebildet und um den durchgehenden Stab (14) herum angeordnet sind.

## Claims

1. Bearing assembly, comprising at least
- a first magnet assembly (34) for generating a first quadrupole magnetic field on a first plane and a second magnet assembly (36) for generating a second quadrupole magnetic field on a second plane, wherein the quadrupole magnetic fields in each case have magnetic field axes arranged at an angle to one another on the planes between four poles,
- wherein the second plane is arranged parallel to the first plane and a longitudinal axis (A) is defined by the centres of the quadrupole magnetic fields perpendicularly to the magnetic field axes,
- and at least one diamagnetic element (44), which is arranged on the longitudinal axis (A),
- wherein the first and second magnetic assemblies (34, 36) are arranged relative to one another such that the first and the second quadrupole magnetic fields are rotated relative to each other about the longitudinal axis (A) by an angular amount which is not a whole-number multiple of 90º.

2. Bearing assembly according to claim 1, wherein
- the first and the second quadrupole magnetic fields are rotated relative to one another by 5º to 85º.

3. Bearing assembly according to any one of the preceding claims, wherein
- the first and/or the second magnet assembly (34, 36) have a number of magnet segment elements (46) arranged around the centre.

4. Bearing assembly according to claim 3, wherein
- the magnet segment elements (46) are magnetised in the tangential and/or radial direction.

5. Bearing assembly according to claim 3 or 4, wherein
- the magnet segment elements (46) are arranged in Halbach geometry.

6. Bearing assembly according to any one of claims 3 - 5, wherein
- the magnet segment elements (46) are configured in such a way that they extend about the longitudinal axis (A) by an equally large angle range,
- and the angular amount of the rotation corresponds to a whole-figure multiple of the angle range of a magnet segment element (46).

7. Bearing assembly according to any one of the preceding claims, wherein
- a third magnet assembly (38) is provided for generating a third quadrupole magnetic field on a third plane, which is arranged parallel to the first and second plane.

8. Bearing assembly according to claim 7, wherein
- a fourth magnet assembly (40) is provided for generating a fourth quadrupole magnetic field on a fourth plane, which is arranged parallel to the first, second and third plane.

9. Bearing assembly according to any one of the preceding claims, wherein
- the diamagnetic element (44) has a length which is greater than the distance interval between the planes.

10. Magnetic levitation assembly with
- at least one first bearing assembly (20) according to any one of the preceding claims, wherein the planes are arranged horizontally and the diamagnetic element (44) is located on a levitation element (12) which extends vertically,
- and at least one lifting assembly (26), which comprises at least one lifting magnet element (32) arranged on the levitation element, and at least one lifting coil (28, 30) and/or one or more permanent magnet elements (27, 29), in order to generate a lifting force taking effect on the levitation element (12).

11. Magnetic levitation assembly according to claim 10, wherein
- provided at a distance from the first bearing assembly (20) is a second bearing assembly (22), with at least one magnet assembly (34, 36, 38, 40) for generating a quadrupole magnetic field, and with at least one diamagnetic element (44) in the centre of the quadrupole magnetic field,
- wherein the lifting arrangement (26) is arranged between the first and second bearing assembly (20, 22).

12. Magnetic levitation assembly according to claim 10 or 11, wherein
- the levitation element (12) comprises a continuous bar (14) made of a ceramic material,
- and at least one diamagnetic element (44) and/or the lifting magnetic element (32) are configured in a ring shape and are arranged around the continuous bar (14).

13. Method for the bearing arrangement of an axle element (14), wherein
- at least one diamagnetic element (44) is arranged on a longitudinal axis of a bearing (20,22),
- wherein the bearing (20, 22) comprises at least one first magnetic assembly (34) for generating a first quadrupole magnetic field on a first plane and a second magnetic assembly (36) for generating a second quadrupole magnetic field on a second plane, wherein the quadrupole magnetic fields on each of the planes have magnetic field axes arranged at an angle relative to one another between four poles,
- wherein the first and second magnetic assemblies (34, 36) are arranged relative to one another in such a way that the first and the second quadrupole magnetic field are rotated relative to one another about the longitudinal axis (A) by an angle amount which is not a whole-number multiple of 90º.

14. Magnetic levitation assembly with
- a levitation element (12) extending vertically,
- at least one first and one second bearing assembly (20, 22), wherein the first and second bearing assemblies (20, 22) each comprise at least one magnet assembly (34) for generating a quadrupole magnetic field, and at least one diamagnetic element (44) in the centre of the quadrupole magnetic field, wherein the diamagnetic element (44) is located on the levitation element (12),
- and at least one lifting assembly (26), wherein the lifting assembly (26) comprises at least one lifting magnetic element (32) on the levitation element (12), and at least one lifting coil (28, 30) and/or one or more permanent magnetic elements (27, 29), in order to generate a lifting force taking effect on the levitation element (12), wherein the lifting assembly (26) is arranged between the first and the second bearing assembly (20, 22).

15. Magnetic levitation assembly with
- a levitation element (12) extending vertically,
- at least one first and one second bearing assembly (20, 22), wherein the first and second bearing assemblies (20, 22) each comprise at least one magnet assembly (34) for generating a quadrupole magnetic field, and at least one diamagnetic element (44) in the centre of the quadrupole magnetic field, wherein the diamagnetic element (44) is located on the levitation element (12),
- and at least one lifting assembly (26), wherein the lifting assembly (26) comprises at least one lifting magnetic element (32) on the levitation element (12), and at least one lifting coil (28, 30) and/or one or more permanent magnetic elements (27, 29), in order to generate a lifting force taking effect on the levitation element (12).
- wherein the levitation element (12) comprises a continuous bar (14) made of a ceramic material,
- and the diamagnetic element (44) and/or the lifting magnetic element (32) are configured in a ring shape and are arranged around the continuous bar (14).

## Revendications

1. Ensemble palier, comprenant au moins
- un premier ensemble magnétique (34) pour générer un premier champ magnétique quadripolaire dans un premier plan et un deuxième ensemble magnétique (36) pour générer un deuxième champ magnétique quadripolaire dans un deuxième plan, dans lequel les champs magnétiques quadripolaires dans chaque cas ont des axes de champs magnétiques agencés de manière inclinée les uns par rapport aux autres dans les plans entre les quatre pôles,
- dans lequel le deuxième plan est agencé parallèlement au premier plan et un axe longitudinal (A) est défini par les centres des champs magnétiques quadripolaires perpendiculairement aux axes des champs magnétiques,
- et au moins un élément diamagnétique (44) qui est agencé sur l'axe longitudinal (A),
- dans lequel les premier et deuxième ensembles magnétiques (34, 36) sont agencés l'un par rapport à l'autre de telle sorte que le premier et le deuxième champs magnétiques quadripolaires sont inclinés l'un par rapport à l'autre autour de l'axe longitudinal (A) d'une valeur angulaire qui n'est pas un multiple entier de 90º.

2. Ensemble palier selon la revendication 1, dans lequel
- le premier et le deuxième champs magnétiques quadripolaires sont tournés l'un par rapport à l'autre de 5º à 85º.

3. Ensemble palier selon l'une quelconque des revendications précédentes, dans lequel
- le premier et/ou le deuxième ensembles magnétiques (34, 36) ont un certain nombre d'éléments de segments d'aimant (46) agencés autour du centre.

4. Ensemble palier selon la revendication 3, dans lequel
- les éléments de segments d'aimant (46) sont aimantés dans la direction tangentielle et/ou radiale.

5. Ensemble palier selon la revendication 3 ou 4, dans lequel
- les éléments de segments d'aimant (46) sont agencés selon la géométrie de Halbach.

6. Ensemble palier selon l'une quelconque des revendications 3 - 5, dans lequel
- les éléments de segments d'aimant (46) sont configurés de façon à s'étendre autour de l'axe longitudinal (A) d'une plage angulaire de même grandeur,
- et la valeur angulaire de la rotation correspond à un multiple entier de la plage angulaire d'un élément de segment d'aimant (46).

7. Ensemble palier selon l'une quelconque des revendications précédentes, dans lequel
- un troisième ensemble magnétique (38) est fourni pour générer un troisième champ magnétique quadripolaire dans un troisième plan, lequel est agencé parallèlement aux premier et deuxième plans.

8. Ensemble palier selon la revendication 7, dans lequel
- un quatrième ensemble magnétique (40) est fourni pour générer un quatrième champ magnétique quadripolaire dans un quatrième plan, lequel est agencé parallèlement aux premier, deuxième et troisième plans.

9. Ensemble palier selon l'une quelconque des revendications précédentes, dans lequel
- l'élément diamagnétique (44) a une longueur qui est supérieure à l'intervalle de distance entre les plans.

10. Ensemble de sustentation magnétique avec
- au moins un premier ensemble palier (20) selon l'une quelconque des revendications précédentes, dans lequel les plans sont agencés horizontalement et l'élément diamagnétique (44) est situé sur un élément de sustentation (12) qui s'étend verticalement,
- et au moins un ensemble de levage (26), qui comprend au moins un élément d'aimant de levage (32) agencé sur l'élément de sustentation, et au moins une bobine de levage (28, 30) et/ou un ou plusieurs éléments magnétiques permanents (27, 29), afin de générer une force de levage ayant un effet sur l'élément de sustentation (12).

11. Ensemble de sustentation magnétique selon la revendication 10, dans lequel
- est fourni à une distance du premier ensemble palier (20) un deuxième ensemble palier (22), avec au moins un ensemble magnétique (34, 36, 38, 40) pour générer un champ magnétique quadripolaire, et avec au moins un élément diamagnétique (44) au centre du champ magnétique quadripolaire,
- dans lequel l'agencement de levage (26) est agencé entre le premier et le deuxième ensembles paliers (20, 22).

12. Ensemble de sustentation magnétique selon la revendication 10 ou 11, dans lequel
- l'élément de sustentation (12) comprend une barre continue (14) fabriquée dans un matériau céramique,
- et au moins un élément diamagnétique (44) et/ou l'élément magnétique de levage (32) sont configurés en forme d'anneau et sont agencés autour de la barre continue (14).

13. Procédé d'agencement d'un palier d'un élément d'essieu (14), dans lequel
- au moins un élément diamagnétique (44) est agencé sur un axe longitudinal d'un palier (20, 22),
- dans lequel le palier (20, 22) comprend au moins un premier ensemble magnétique (34) pour générer un premier champ magnétique quadripolaire dans un premier plan et un deuxième ensemble magnétique (36) pour générer un deuxième champ magnétique quadripolaire dans un deuxième plan, dans lequel les champs magnétiques quadripolaires dans chacun des plans ont des axes de champs magnétiques agencés à un angle l'un par rapport à l'autre entre les quatre pôles,
- dans lequel les premier et deuxième ensembles magnétiques (34, 36) sont agencés l'un par rapport à l'autre de telle sorte que le premier et le deuxième champs magnétiques quadripolaires sont tournés l'un par rapport à l'autre autour de l'axe longitudinal (A) d'une valeur angulaire qui n'est pas un multiple entier de 90º.

14. Ensemble de sustentation magnétique ayant
- un élément de sustentation (12) s'étendant verticalement,
- au moins un premier et un deuxième ensembles paliers (20, 22), dans lequel les premier et deuxième ensembles paliers (20, 22) comprennent chacun au moins un ensemble magnétique (34) pour générer un champ magnétique quadripolaire, et au moins un élément diamagnétique (44) au centre du champ magnétique quadripolaire, dans lequel l'élément diamagnétique (44) est situé sur l'élément de sustentation (12),
- et au moins un ensemble de levage (26), dans lequel l'ensemble de levage (26) comprend au moins un élément magnétique de levage (32) sur l'élément de sustentation (12), et au moins une bobine de levage (28, 30) et/ou un ou plusieurs éléments magnétiques permanents (27, 29), afin de générer une force de levage ayant un effet sur l'élément de sustentation (12), dans lequel l'ensemble de levage (26) est agencé entre le premier et le deuxième ensembles paliers (20, 22).

15. Ensemble de sustentation magnétique ayant
- un élément de sustentation (12) s'étendant verticalement,
- au moins un premier et un deuxième ensembles paliers (20, 22), dans lequel les premier et deuxième ensembles paliers (20, 22) comprennent chacun au moins un ensemble magnétique (34) pour générer un champ magnétique quadripolaire, et au moins un élément diamagnétique (44) au centre du champ magnétique quadripolaire, dans lequel l'élément diamagnétique (44) est situé sur l'élément de sustentation (12),
- et au moins un ensemble de levage (26), dans lequel l'ensemble de levage (26) comprend au moins un élément magnétique de levage (32) sur l'élément de sustentation (12), et au moins un bobine de levage (28, 30) et/ou un ou plusieurs éléments magnétiques permanents (27, 29), afin de générer une force de levage ayant un effet sur l'élément de sustentation (12),
- dans lequel l'élément de sustentation (12) comprend une barre continue (14) fabriquée dans un matériau céramique,
- et l'élément diamagnétique (44) et/ou l'élément magnétique de levage (32) sont configurés en forme d'anneau et sont agencés autour de la barre continue (14).
